# EUROPEAN PATENT APPLICATION

(11) **EP 4 527 792 A1**
(43) Date of publication of application: **26.03.2025**
(21) Application number: 22942814.9
(22) Date of filing: 20.05.2022
(51) Int. Cl.: C01B 17/22, C01B 17/38, H01M 10/0562

(54) **METHOD FOR PRODUCING LITHIUM SULFIDE**

(71) Applicant: Solid Ionics Co., Ltd, Gangneung-si 25440 (KR)
(72) Inventor: SINN, Dong Sook, Seoul 06362 (KR)
(74) Representative: Caldon, Giuliano
(86) International application number: PCT/KR2022/007261
(87) International publication number: WO 2023/224150

(57) **Abstract**

The present disclosure discloses a method for producing lithium sulfide, the method comprising a lithium sulfide synthesis step of synthesizing lithium sulfide powder by reacting lithium sulfate powder with a reaction gas containing carbon monoxide, wherein the method further comprising before the lithium sulfide synthesis step,a lithium sulfate pulverization step for pulverizing the lithium sulfate powder into a predetermined size.

## Description

### [TECHNICAL FIELD]

The present invention relates to a method for producing lithium sulfide (Li₂S).

### [BACKGROUND ART]

Lithium sulfide has recently been increasingly needed as a raw material for solid electrolytes for allsolidstate lithium secondary batteries. All solid state lithium secondary batteries are a type of lithium secondary battery that replaces the organic liquid electrolyte and separator with a solid electrolyte in currently commercialized lithium secondary batteries. Since solid electrolytes are non-flammable or flame retardant, they are safer than liquid electrolytes. Solid electrolytes are divided into oxide types and sulfide types. Sulfide type solid electrolytes are mainly used as solid electrolytes because they have higher lithium ion conductivity and stability over a wide voltage range compared to oxide type solid electrolytes.

Because lithium sulfide does not exist as a natural mineral, it is obtained synthetically from other lithium compounds. In general, lithium sulfide may be manufactured by a synthetic process using lithium hydroxide or lithium carbonate as a lithium source. For example, a method for producing lithium sulfide may produce lithium sulfide by reacting a solid lithium source (e.g., lithium hydroxide or lithium carbonate) with a gaseous sulfur source (S or CS₂(g)). However, since lithium hydroxide or lithium carbonate is difficult to pulverize into fine powder, the reaction efficiency with gas, which is a sulfur source, is reduced, so it may be difficult to manufacture high purity lithium sulfide. In addition, since lithium sulfide increases in size during the synthesis process, its reactivity may decrease during the synthesis process of the solid electrolyte. Additionally, lithium hydroxide and lithium carbonate, which are used as lithium sources, are expensive, which may increase the manufacturing cost of lithium sulfide.

### [DISCLOSURE]

### [TECHNICAL PROBLEM]

The purpose of the present invention is to provide a method for producing lithium sulfide which may reduce the cost of producing lithium sulfide and increase the purity of lithium sulfide powder.

In addition, the purpose of the present invention is to provide a method for producing lithium sulfide, which may reduce the size of lithium sulfide powder to increase the reactivity of the powder.

### [TECHNICAL SOLUTION]

The method for producing lithium sulfide of the present invention is characterized by comprising a lithium sulfide synthesis step of synthesizing lithium sulfide powder by reacting lithium sulfate powder with a reaction gas containing carbon monoxide.

In addition, the method for manufacturing lithium sulfide of the present invention may further comprise a lithium sulfide pulverization step of pulverizing lithium sulfate powder to a predetermined size before the lithium sulfide synthesis step.In addition, the lithium sulfate crushing step may crush the lithium sulfate powder into a powder having a diameter of 0.01 ~ 10.0 µm.

In addition, the method may further comprise a lithium sulfate preheating step for removing moisture remaining in the lithium sulfate powder by heating the lithium sulfate powder after the lithium sulfate pulverization step.In addition, the lithium sulfate preheating step may be carried out by heating the lithium sulfate hydrate to 100 ~ 400°C.

In addition, the Method may further comprise a lithium sulfide powder heat treatment step for increasing the crystallinity of the lithium sulfide powder by heat treating the synthesized lithium sulfide powder after the lithium sulfide synthesis step.In addition, the lithium sulfide powder heat treatment step may be performed at a heat treatment temperature higher than the synthesis temperature of the lithium sulfide synthesis step.

In addition, the synthesis temperature of the lithium sulfide synthesis step may be 650 ~ 840°C, and the heat treatment temperature of the lithium sulfide powder heat treatment step may be 850 ~ 930°C.

In addition, the reaction gas may further comprise hydrogen and a transport gas.In addition, the reaction gas may comprise carbon monoxide at 10 ~ 50 vol% based on the total volume of the reaction gas, hydrogen and transport gas at 50 ~ 90 vol%, and the transport gas and hydrogen may be comprised in a volume ratio of 90:10 ~ 99:1.In addition, the reaction gas may comprise 10 ~ 50 vol% of carbon monoxide, 0.5 ~ 10 vol% of hydrogen, and 45 ~ 90 vol% of the transport gas based on the total volume of the reaction gas.

In addition, the reaction gas may further comprise hydrogen, and carbon monoxide may be comprised in an amount 90 ~ 99.5 vol%and hydrogen may be comprised in an amount of 0.5 ~ 10 vol% based on the total volume of the reaction gas.

In addition, the lithium sulfide powder may be used as a solid electrolyte for an all solid state battery.

### [ADVANTAGEOUS EFFECT]

The method for producing lithium sulfide of the present invention has the effect of reducing the producing cost by using lithium sulfate or lithium sulfate hydrate as a lithium source.

In addition, the method for producing lithium sulfide of the present invention does not use carbon, so no carbon remains in the produced lithium sulfide powder, thereby increasing the purity of the lithium sulfide powder.

In addition, the method for producing lithium sulfide of the present invention uses lithium sulfate that may be crushed into a relatively small size compared to other lithium sources, so the size of the produced lithium sulfide powder becomes smaller.

In addition, the method for producing lithium sulfide of the present invention uses lithium sulfate pulverized into a small size, so the surface area increases, thereby increasing the reactivity with gas, thereby increasing the crystallinity of the lithium sulfide powder.

In addition, the method for producing lithium sulfide of the present invention produces lithium sulfide powder as a fine powder, so there is an effect of increasing the reactivity of lithium sulfate powder and other powders during the solid electrolyte synthesis process.

### [DESCRIPTION OF DRAWINGS]

FIG. 1 is a process diagram of a method for producinglithium sulfide according to one embodiment of the present invention.
FIG. 2 is a SEM photograph of lithium sulfate powder used in a specific embodiment of the present invention before pulverization.
FIG. 3 is a SEM photograph of lithium sulfate powder used in a specific embodiment of the present invention after pulverization.
FIG. 4 is an XRD graph of lithium sulfide powder synthesized according to a specific embodiment of the present invention.
FIG. 5 is an XRD graph of commercial lithium sulfide powder.
FIG. 6 is a graph showing the charge/discharge performance of a half-cell made using the synthesized lithium sulfide powder of FIG. 4 and commercial lithium sulfide powder.

### [BEST MODE OF THE DISCLOSURE]

Hereinafter, a method for producing lithium sulfide according to one embodiment of the present invention will be described in detail.

First, a method for producing lithium sulfide according to one embodiment of the present invention will be described.

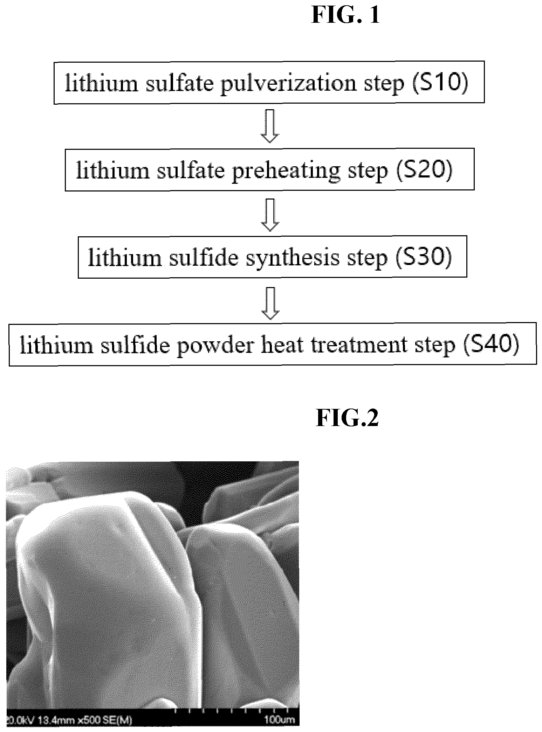

FIG. 1 is a process diagram of a method for producing lithium sulfide according to one embodiment of the present invention.

The method for producing lithium sulfide according to one embodiment of the present invention may comprise a lithium sulfate pulverization step (S10) and a lithium sulfide synthesis step (S30), referring to FIG. 1. In addition, the method for producing lithium sulfide may further comprise a lithium sulfate preheating step (S20) and a lithium sulfide powder heat treatment step (S40).

The method for producing lithium sulfide may use lithium sulfate or lithium sulfate hydrate as a lithium source. Additionally, the method for producing lithium sulfide may use a gas containing carbon monoxide (CO) as a reaction gas. Additionally, the reaction gas may further comprise hydrogen. Additionally, the reaction gas may further comprise hydrogen and a transport gas. The transport gas may comprise at least one selected from nitrogen (N₂) and argon (Ar).

The method for producing lithium sulfide may produce lithium sulfide by reacting lithium sulfate and carbon monoxide according to the reaction formula of Formula 1) or Formula 2) below.

Li₂SO₄ + 4CO → Li₂S + 4CO₂------- 1)

Li₂SO₄ + 2CO + 2H₂→ Li₂S + 2CO₂+ 2H₂O------- 2)

The method for producing lithium sulfide may reduce producing costs since it uses lithium sulfate or lithium sulfate hydrate as a lithium source. In addition, since the method for producing lithium sulfide does not use carbon, no carbon remains in the produced lithium sulfide powder, so the purity of the synthesized lithium sulfide powder may be increased.In addition, the method for producing lithium sulfide uses lithium sulfate that may be pulverized into a relatively small size compared to other lithium sources, so the size of the produced lithium sulfide powder may be reduced. In addition, since the method for producing lithium sulfide uses lithium sulfate pulverized into a small size, the surface area increases and the reactivity with gas increases, which may increase the crystallinity of the lithium sulfide powder. In addition, since the method for producing lithium sulfide produces lithium sulfide as a fine powder, the reactivity of the lithium sulfate powder and other powders may be increased during the solid electrolyte synthesis process.

The lithium sulfate pulverization step(S10) is a step of pulverizing lithium sulfate powder into a predetermined size. The lithium sulfate powder may be used as a raw material in the form of relatively coarse powders of various sizes. For example, the lithium sulfate powder may be lithium sulfate powder having an average particle size of about 200µm. In order for the lithium sulfide powder to have constant characteristics, it is necessary to use a powder having a certain size range. Therefore, the lithium sulfate pulverization step (S10) maypulverizethe lithium sulfate powder into powder having a predetermined size. The lithium sulfate powder may preferably be pulverized into a powder having a diameter of 0.01 ~ 10.0µm. The lithium sulfate powder may preferably be pulverized into a powder having a diameter of 0.01 ~ 10.0µm. The lithium sulfate pulverization step (S10) may be performed using a grinding device such as a ball mill device.

The lithium sulfate preheating step (S20) is a step of preheating lithium sulfate powder to remove moisture remaining in the lithium sulfate powder. The lithium sulfate preheating step (S20) may be optionally performed when lithium sulfate hydrate is used as a lithium source. The lithium sulfate hydrate powder may be Li₂SO₄ · nH₂O. The lithium sulfate preheating step (S20) may be performed to remove moisture remaining in lithium sulfate powder even when lithium sulfate powder is used as a lithium source.

The lithium sulfate preheating step (S20) may be performed by heating lithium sulfate hydrate powder or lithium sulfate powder at a preheating temperature of 100 ~ 400°C. The lithium sulfate preheating step (S20) may be performed by a reaction as in Formula 3) below.

Li₂SO₄ · H₂O → Li₂SO₄ + H₂O ------- 3)

The lithium sulfide synthesis step (S30) is a step of synthesizing lithium sulfide powder by reacting lithium sulfate powder with the reaction gas. The lithium sulfide powder may be synthesized by reacting lithium sulfate powder with the reaction gas through a reaction such as the above formula 1) or formula 2).

The lithium sulfide synthesis step (S30) may be performed at a synthesis temperature of 650 ~ 840°C and a synthesis time of 0.5 ~ 5 hours using the lithium sulfate powder. In the lithium sulfide synthesis step (S30), the synthesis temperature may be set at a temperature lower than the melting point of lithium sulfate. The lithium sulfide synthesis step (S30) may be performed at the synthesis temperature lower than 845°C, which is the melting point of lithium sulfate. Additionally, the lithium sulfide synthesis step (S30) may be performed by heating the lithium sulfate powder while supplying the reaction gas. The lithium sulfide synthesis step (S30) may synthesize lithium sulfide while separating oxygen from the lithium sulfate powder.

The reaction gas may comprise carbon monoxide (CO). Additionally, the reaction gas may comprise carbon monoxide (CO) and a transport gas. Additionally, the reaction gas may comprise carbon monoxide (CO) and hydrogen (H₂). Additionally, the reaction gas may comprise carbon monoxide (CO), hydrogen (H₂), and the transport gas. The transport gas may comprise at least one selected from nitrogen (N₂) and argon (Ar). When the reaction gas is a mixed gas of carbon monoxide and the transport gas, carbon monoxide may be mixed at 10 ~ 50 vol% and the transport gas may be mixed at 50 ~ 90 vol% based on the total volume of the reaction gas. Additionally, the carbon monoxide may be mixed preferably at 25 ~ 40 vol% and the transport gas may be mixed at 50 ~ 90 vol% based on the total volume of the reaction gas. In addition, when the reaction gas is a mixed gas of carbon monoxide and hydrogen, carbon monoxide may be mixed at 90 ~ 99.5 vol% and hydrogen may be mixed at 0.5 ~ 10 vol% based on the total volume of the reaction gas. In addition, when the reaction gas is a mixed gas of carbon monoxide, hydrogen, and the transport gas, carbon monoxide may be mixed at 10 ~ 50 vol%, hydrogen and the transport gas may be mixed at 50 ~ 90 vol% based on the total volume of the reaction gas. At this time, hydrogen may be mixed with carbon monoxide while being mixed with the transport gas. Additionally, the transport gas and hydrogen may be mixed in a volume ratio of 90:10 ~ 99:1.Additionally, the hydrogen may be mixed with carbon monoxide separately from the transport gas. At this time, the reaction gas may be mixed with 10 ~ 50 vol% of carbon monoxide, 0.5 ~ 10 vol% of hydrogen, and 45 ~ 90 vol% of the transport gas.

Carbon monoxide may react with the oxygen of lithium sulfate to produce carbon dioxide, thereby synthesizing lithium sulfide. Hydrogen may react with the oxygen of lithium sulfate to produce water vapor (H₂O), thereby synthesizing lithium sulfide. In addition, the transport gas may separate carbon dioxide and water vapor (H₂O) generated during the lithium sulfide synthesis process from lithium sulfide and transport them to the outside. Therefore, the transport gas may enable the lithium sulfide powder to be efficiently synthesized with high purity.

The lithium sulfide powder heat treatment step (S40) is a step of heat treating the synthesized lithium sulfide powder to increase the crystallinity of the lithium sulfide powder. The lithium sulfide powder heat treatment step may be performed while supplying the reaction gas used in the lithium sulfide synthesis step. The lithium sulfide powder heat treatment step may be optionally performed, and may be performed when it is necessary to increase the crystallinity of lithium sulfide powder synthesized in the lithium sulfide synthesis step.

The lithium sulfide powder heat treatment step may be performed at a heat treatment temperature of 850 ~ 930°C for a heat treatment time of 0.5 ~ 5 hours. In the lithium sulfide powder heat treatment step, the heat treatment temperature may be set to a temperature lower than the melting point of lithium sulfide. Additionally, the heat treatment temperature may be performed at a temperature higher than the synthesis temperature. For example, the heat treatment temperature may be determined in a temperature range higher than 845°C, which is the melting point of lithium sulfate, and lower than 938°C, which is the melting point of lithium sulfide.If the heat treatment temperature is too high, the lithium sulfide powder may partially melt, thereby reducing its crystallinity. In addition, if the heat treatment temperature is too low, the degree of increase in the crystallinity of the lithium sulfide powder may be small.

The following describes the method for producing lithium sulfide of the present invention through more specific embodiments.

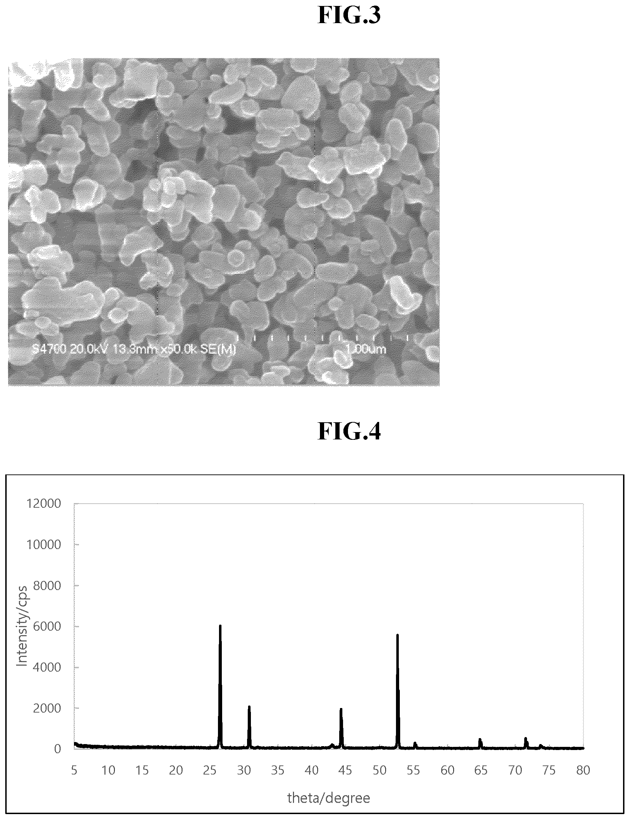

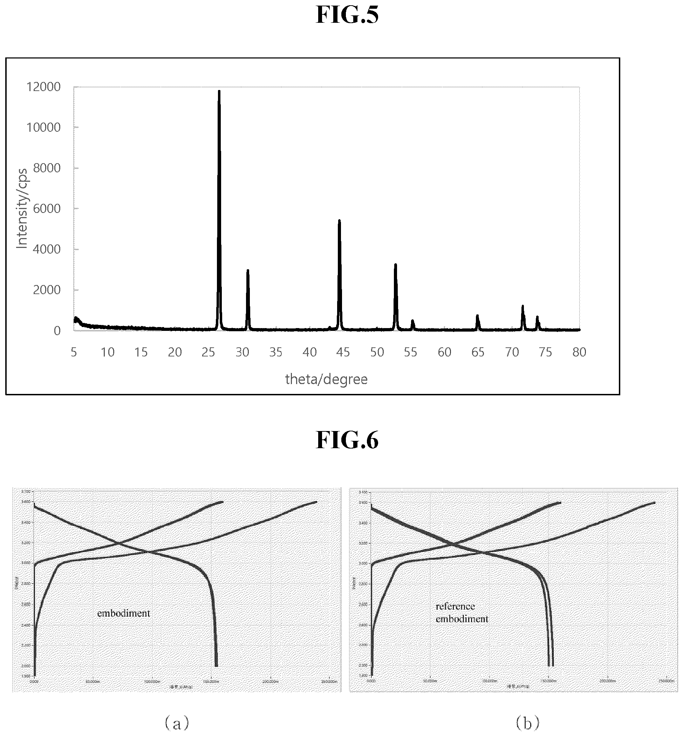

FIG. 2 is a SEM photograph of sulfate powder used in a specific embodiment of the present invention before pulverization.FIG. 3 is a SEM photograph of lithium sulfate powder used in a specific embodiment of the present invention after pulverization.FIG. 4 is an XRD graph of lithium sulfide powder synthesized according to a specific embodiment of the present invention.FIG. 5 is an XRD graph of commercial lithium sulfide powder. FIG. 6 is a graph showing the charge/discharge performance of a half-cell made using the synthesized lithium sulfide powder of FIG. 4 and commercial lithium sulfide powder.

In this embodiment, lithium sulfate monohydrate (Li₂SO₄·H₂O) was used as the lithium source. As shown in Fig. 2, the lithium sulfate monohydrate has a size of approximately 200µm.The lithium sulfate monohydrate was pulverized using a ball mill device. As shown in Fig. 3, the lithium sulfate monohydrate was pulverized into a powder having a diameter of approximately 0.1µm.The pulverized lithium sulfate powder was placed in an alumina boat and heated in a tube furnace. The lithium sulfate powder was synthesized at a synthesis temperature of 780°C for a synthesis time of 5 hours. In this embodiment, the lithium sulfate preheating step was not performed. In addition, the lithium sulfide powder heat treatment step was not performed in this embodiment.

In this embodiment, the crystallinity of the synthesized lithium sulfide powder was evaluated, and a solid electrolyte was manufactured to evaluate various characteristics. In addition, in this embodiment, commercial lithium sulfide powder was purchased and evaluated together as a reference for comparative evaluation.

### [crystallinity evaluation]

As shown in the XRD graph of Fig. 4, the synthesized powder of the embodiment only shows a Li₂S peak, and no peaks for the unreacted phase or secondary phase are observed. Therefore, it may be confirmed that the synthesized powder is a lithium sulfide powder having crystallinity.

As shown in the XRD graph of Fig. 5, the commercial lithium sulfide powder of the reference embodiment shows peaks at the same positions as Fig. 4. Therefore, it may be confirmed that the synthesized powder has the same phase as the commercial lithium sulfide powder.

### [Producing of solid electrolyte powder]

4.28 g of the synthesized lithium sulfide powder was mixed with 4.141 g of commercial P₂S₅ powder and 1.58 g of commercial LiCl powder, placed in a 250cc zirconia container and sealed with 300 g of 3 mm diameter zirconia balls and 40 g of solvent, and milled with a planetary mill at 600 rpm for 20 hours to produce a mixed powder. At this time, since the synthesized lithium sulfide powder is vulnerable to moisture, the mixing and sealing processes of the powder were carried out in a glove box replaced with sufficiently dried Ar gas.

The milled mixed powder was dried in a vacuum oven at 110°C for 15 hours and then heat-treated at 360°C for 5 hours in a quartz tube sealed with Ar gas to produce a solid electrolyte powder. The solid electrolyte powder after the heat treatment was analyzed by X-ray diffraction, and the Li₆PS₅Cl peak was confirmed.

### [Ionic Conductivity Measurement]

The produced solid electrolyte powder was uniaxially pressed at a pressure of 560 MPa in a glove box to produce pellets, and the ionic conductivity was measured by the AC impedance method. According to the evaluation results, the solid electrolyte powder mixed with the lithium sulfide powder of the embodiment was measured to have an ionic conductivity of 2.09 mS/cm. Meanwhile, the solid electrolyte powder mixed with the lithium sulfide powder of the reference embodiment was measured to have an ionic conductivity of 2.10 mS/cm. Therefore, it may be confirmed that the solid electrolyte powder of the embodiment has good ionic conductivity.

### [Production of a half cell and evaluation of charge/discharge performance]

150 mg of the solid electrolyte powder of the embodiment was uniaxially pressed and molded at a pressure of 450 MPa in a mold having a diameter of 12 mm to produce a solid electrolyte pellet. This molding process was performed in a glove box filled with argon gas. A cathode material by mixing 57.6 weight parts of lithium composite oxide (LiNi_{0.8}Co_{0.1}Mn_{0.1}O₂) powder, 38.4 weight parts of the solid electrolyte powder whose average particle diameter was adjusted to 1 µm, and 4 weight parts of carbon black conductive material was placed on the upper surface of the solid electrolyte pellet, and the mixture was uniaxially pressed and molded at a pressure of 550 MPa. Additionally, indium (In) powder as an anode material was molded by applying a pressure of 217 MPa to produce a half-cell. Charge and discharge were performed on the produced half-cell at 30°C and by 0.05C in a charge-discharge range of 0.6 ~ 3.6 V.

In addition, a half-cell was produced in the same manner using a solid electrolyte powder mixed with commercial lithium sulfide powder.

As shown in Fig. 6, it may be confirmed that the half-cells according to embodiment(a) and Reference embodiment(b) exhibit equivalent charge/discharge performance. Therefore, it may be confirmed that the lithium sulfide powder according to the embodiment has the same characteristics as commercial lithium sulfide powder when the lithium sulfide powder is used in a solid electrolyte powder.

The evaluation results for lithium sulfide powder of embodiment and reference embodiment are summarized in Table 1 below.

**[Table 1]**

| division | Ionic Conductivity (mS/cm) | 1 cycle charge/discharge (mAh/g) | | 2 cycle charge/discharge (mAh/g) | |
|---|---|---|---|---|---|
| | | Charging capacity | Discharge capacity | Charging capacity | Discharge capacity |
| embodiment | 2.09 | 238.6 | 153.6 | 159.4 | 154.7 |
| reference embodiment | 2.10 | 239.7 | 150.4 | 160.0 | 153.7 |

As seen from the specific embodiment above, it was confirmed that the method for producing lithium sulfide powder according to the embodiment of the present invention may be applied to producing lithium sulfide powder for solid electrolyte powder. The method for producing lithium sulfide powder according to the embodiment of the present invention may easily produce lithium sulfide powder at low cost since it uses relatively inexpensive lithium sulfate as a lithium source.

The above description is only one embodiment for carrying out the method for producing lithium sulfide according to the present invention, and the present invention is not limited to the above embodiment, and as claimed in the following claims, it will be understood that the technical spirit of the present invention encompasses a range in which various modifications may be implemented without departing from the gist of the present invention.

## Claims

1. A method for producing lithium sulfide, the method comprising;
a lithium sulfide synthesis step of synthesizing lithium sulfide powder by reacting lithium sulfate powder with a reaction gas containing carbon monoxide.

2. The Method according to claim 1, further comprising before the lithium sulfide synthesis step,
a lithium sulfate pulverization step for pulverizing the lithium sulfate powder into a predetermined size.

3. The Method according to claim 2, wherein the lithium sulfate pulverization step pulverize the lithium sulfate powder into a powder having a diameter of 0.01 ~ 10.0 µm.

4. The Method according to claim 2, further comprising after the lithium sulfate pulverization step,
a lithium sulfate preheating step for removing moisture remaining in the lithium sulfate powder by heating the lithium sulfate powder.

5. The Method according to claim 4, wherein the lithium sulfate preheating step is carried out by heating the lithium sulfate hydrate to 100 ~ 400°C.

6. The Method according to claim 1, further comprising after the lithium sulfide synthesis step,
a lithium sulfide powder heat treatment step for increasing the crystallinity of the lithium sulfide powder by heat treating the synthesized lithium sulfide powder.

7. The Method according to claim 6, wherein the lithium sulfide powder heat treatment step is performed at a heat treatment temperature higher than the synthesis temperature of the above lithium sulfide synthesis step.

8. The Method according to claim 7, wherein the synthesis temperature of the lithium sulfide synthesis step is 650 ~ 840°C, and the heat treatment temperature of the lithium sulfide powder heat treatment step is 850 ~ 930°C.

9. The Method according to claim 1, whereinthe reaction gas further comprises hydrogen and a transport gas.

10. The Method according to claim 9, wherein the reaction gas comprisescarbon monoxide at 10 ~ 50 vol% based on the total volume of the reaction gas, hydrogen and transport gas at 50 ~ 90 vol%, and the transport gas and hydrogen are comprised in a volume ratio of 90:10 ~ 99:1.

11. The Method according to claim 9, wherein the reaction gas comprises 10 ~ 50 vol% of carbon monoxide, 0.5 ~ 10 vol% of hydrogen, and 45 ~ 90 vol% of the transport gas based on the total volume of the reaction gas.

12. The Method according to claim 1, wherein the reaction gas further comprises hydrogen, and the carbon monoxide is comprised in an amount of 90 ~ 99.5 vol% and hydrogen is comprised in an amount of 0.5 ~ 10 vol% based on the total volume of the reaction gas.

13. The Method according to claim 1, wherein the lithium sulfide powder is used as a solid electrolyte for an all-solid-state battery.
